# EUROPÄISCHE PATENTSCHRIFT

(11) **EP 1 236 311 B1**
(45) Veröffentlichungstag und Bekanntmachung des Hinweises auf die Patenterteilung: **18.02.2004**
(21) Anmeldenummer: 00993209.6
(22) Anmeldetag: 21.11.2000
(51) Int. Cl.: H04L 12/28, H04L 12/56

(54) **VERFAHREN ZUR STEUERUNG VON FUNKSTATIONEN**
METHOD FOR CONTROLLING RADIO STATIONS
PROCEDE DE COMMANDE DE STATIONS RADIO

(30) Priorität: 23.11.1999 DE 19956318
(43) Veröffentlichungstag der Anmeldung: 04.09.2002
(73) Patentinhaber: ROBERT BOSCH GMBH, 70442 Stuttgart (DE)
(72) Erfinder: VOLLMER, Vasco, 31188 Holle (DE)
(86) Internationale Anmeldenummer: PCT/DE2000/004109
(87) Internationale Veröffentlichungsnummer: WO 2001/039432

(56) Entgegenhaltungen:
- EP-A- 0 903 905
- WO-A-98/38808
- PRASAD N R ET AL: "A STATE-OF-THE-ART OF HIPERLAN/2" AMSTERDAM, SEPT. 19 - 22, 1999,NEW YORK, NY: IEEE,US, Bd. CONF. 50, 19. September 1999 (1999-09-19), Seiten 2661-2666, XP000922239 ISBN: 0-7803-5436-2

## Beschreibung

### Stand der Technik

Es sind drahtlose Netzwerke in Form von LANs (Local Area Networks) bekannt, die derart aufgebaut sind, daß ein zumindest teilweise drahtloses LAN realisiert ist. Ein solches drahtloses LAN wird beispielsweise als zellulares Netz aufgebaut, in dem jeweils eine Zentraleinheit bzw. eine Funkstation eine Funkzelle bedient. In dieser Funkzelle befinden sich mehrere Terminals bzw. Endgeräte. Die Funkstationen sind über ein drahtgebundenes Netzwerk, wie beispielsweise ein IP-Netzwerk, verbunden. Ein Beispiel für ein solches drahtloses LAN ist das Standardisierungsprojekt "BRAN/HIPERLAN Typ 2" des ETSI (European Telecommunication Standards Institut). Ein drahtloses LAN beinhaltet somit ein, in der Regel drahtgebundenes, Core-Netzwerk, über das die Funkstationen miteinander verbunden sind. Die Funkstationen kommunizieren dabei miteinander über das Core-Netzwerk gemäß eines gemeinsamen Kommunikationsprotokolls, wie beispielsweise das IP (Internet Protocol) unter Verwendung des UDP (User Data Protocol), das die verbindungslose Versendung von Datenpaketen über das IP-Netzwerk erlaubt. Hierbei werden im Gegensatz zum TCP (Transmission Control Protocol) keine Funktionen zur Sicherung der Daten bereitgestellt; es gibt somit keine Sicherheit gegen das Duplizieren, den Verlust oder das gegenseitige Überholen einzelner Datenpakete auf dem IP-Netz. Dafür werden UDP-Datenpakete im allgemeinen sehr schnell übermittelt. Das Kommunikationsprotokoll des Core-Netzwerkes, d.h. beispielsweise das IP-Protokoll, ist im gesamten LAN benutzbar, jedoch nicht für spezifische Signalisierungen der Kommunikationspartner des drahtlosen Anteils des LAN ausgelegt.

Aus der WO 9 838 808 A ist ein Verfahren und eine Vorrichtung zur Reduzierung der Reaktionszeit eines Teilnehmerendgerätes bei Handover zwischen verschiedenen Zellen und beim Funkfrequenzwechsel in einem mit TCP/IP betriebenen Mobilfunknetz bekannt. Hierbei werden verbindungsrelevante Daten zwischen einem Teilnehmerendgerät und einem Zwischensystem für mobile Daten über eine Applikationsschicht ausgetauscht.

### Vorteile der Erfindung

Das erfindungsgemäße Verfahren mit den Merkmalen des Hauptanspruchs hat demgegenüber den Vorteil, daß Informationen, die für das Funkübertragungsprotokoll, d.h. das Protokoll für die Kommunikation zwischen Kommunikationspartnern des drahtlosen Anteils des LANs, spezifisch sind, über das Core-Netzwerk übertragen werden. Besonders vorteilhaft wird das erfindungsgemäße Verfahren zur Übertragung von Kontrollinformationen, die für das Funkübertragungsprotokoll spezifisch sind, angewendet, weil dadurch einzelne Prozeduren im drahtlosen Anteil des LANs erheblich beschleunigt durchgeführt werden. Außerdem wird die Funkschnittstelle von Daten entlastet, so daß die Gesamtleistung des Netzes steigt. Weiterhin sind einige Dienste durch die Verwendung von Kontrollinformationen, die für das Funkübertragungsprotokoll spezifisch sind, dadurch erst möglich, insbesondere Service- und Wartungsdienste, die dann nicht zur Verfügung stehen, wenn keine funkspezifischen Kontrollinformationen über das Core-Netzwerk übertragbar sind.

Weiterhin ist von Vorteil, daß durch die zusätzliche Protokollschicht gewährleistet wird, daß nach der Aussendung einer ersten Steuernachricht von der zweiten Funkstation an die erste Funkstation eine Wiederholung der Aussendung der ersten Steuernachricht durch die zweite Funkstation durchgeführt wird, wenn in der zweiten Funkstation vor dem Ablauf eines Zeitintervalls nicht eine zweite Steuernachricht, die von der ersten Funkstation ausgeht und die erste Steuernachricht quittiert und/oder beantwortet, eingegangen ist. Hierdurch wird eine schnelle Übermittlung von Datenpakten, insbesondere durch die Verwendung des UDP-Protokolls, mit einer Kontrolle der erfolgreichen Übermittlung von Datenpaketen verbunden.

Weiterhin ist von Vorteil, daß eine Übergabe (Handover) des wenigstens einen Endgerätes von einer Kommunikation mit der ersten Funkstation zu einer Kommunikation mit der zweiten Funkstation durch eine entsprechende Wahl des Zeitintervalls derart unterstützt wird, daß die wenigstens eine Verbindung nicht unterbrochen wird. Hierdurch ist es möglich, eine kontinuierliche Kommunikation zwischen einem Endgerät und einer Funkstation, selbst bei einer Übergabe des Endgerates von einer Funkstation zu einer anderen Funkstation, zu gewährleisten.

Weiterhin ist von Vorteil, daß in der ersten Funkstation eine Liste der über das Kommunikationsprotokoll erreichbaren Funkstationen geführt und vorzugsweise in regelmäßigen Zeitintervallen aktualisiert wird. Dadurch wird gewährleistet, daß in jeder der Funkstationen eine aktualisierte Information über die erreichbaren Funkstationen vorliegt, so daß eine eventuelle Konfigurationsänderung des Core-Netzwerks, insbesondere durch Hinzufügen oder durch Herausnehmen einzelner Funkstationen, von jeder der Funkstationen automatisch erkannt wird.

Weiterhin ist von Vorteil, daß die Steuernachrichten zwischen der ersten Funkstation und der zweiten Funkstation ausgetauscht werden, wobei jede der Steuernachrichten sowohl einen ersten Teil, der einen Nachrichtentyp der Steuernachricht definiert, einen zweiten Teil, der Optionen der Steuernachricht definiert, und einen dritten Teil, der Daten beinhaltet, umfaßt. Hierdurch können die Steuernachrichten jeweils an die Bedürfnisse der zu übermittelnden Informationen angepaßt werden.

Weiterhin ist von Vorteil, daß in dem dritten Teil einer Steuernachricht Informationselemente, vorzugsweise die verwendete Frequenz einer Funkstation, die Interferenzsituation einer Funkstation, die Verkehrssituation in einer einer Funkstation zugeordneten Funkzelle, die statistischen Parameter über die zurückliegende Verkehrssituation und die Fehlermeldungen, zur Steuerung und/oder zur Verwaltung der Funkstationen zwischen diesen Übertragen werden. Dadurch wird durch den Austausch von Steuernachrichten zwischen verschiedenen Funkstationen das LAN verwaltet und gesteuert.

Weiterhin ist von Vorteil, daß die Steuernachrichten vor ihrer Übertragung verschlüsselt werden. Hierdurch wird eine größere Sicherheit gegen unberechtigtes Mithören oder Fälschen der ausgetauschten Steuernachrichten ermöglicht.

Weiterhin ist von Vorteil, daß das Funkübertragungsprotokoll dem HIPERLAN- oder HIPERLAN-2-Standard entspricht. Hierdurch kann das erfindungsgemäße Verfahren bei allen gemäß diesem Standard betriebenen LAN-Netzwerken benutzt werden.

Weiterhin ist von Vorteil, daß das Kommunikationsprotokoll dem IP-Standard (Internet Protocol) in Verbindung mit dem UDP-Protocol (User Data Protocol), aufbauend entweder auf einem Ethernet-Standard, einem IEEE-802.3-Standard, einem ATM-Standard (Asynchronus Transfer Mode), einem IEEE-1394-Standard oder einem UMTS-Standard (Universal Mobile Telecommunication Service), entspricht. Hierdurch sind auf der Ebene des Core-Netzwerks eine Vielzahl verschiedener Kommunikationsprotokolle einsetzbar.

### Zeichnung

Ein Ausführungsbeispiel der Erfindung ist in der Zeichnung dargestellt und in der nachfolgenden Beschreibung näher erläutert. Es zeigen
Figur 1 ein drahtloses LAN-Netzwerk mit einem Core-Netzwerk und einem drahtlosen Anteil des LAN-Netzwerks,
Figur 2 ein Protokolldiagramm des drahtlosen LAN-Netzwerks,
Figur 3 die Struktur einer Steuernachricht,
Figur 4 ein erstes Signalisierungsdiagramm bei der kontrollierten Übertragung von Steuernachrichten zwischen Funkstationen und
Figur 5 ein zweites Signalisierungsdiagramm bei der kontrollierten Übertragung von Steuernachrichten zwischen Funkstationen.

### Beschreibung des Ausführungsbeispiels

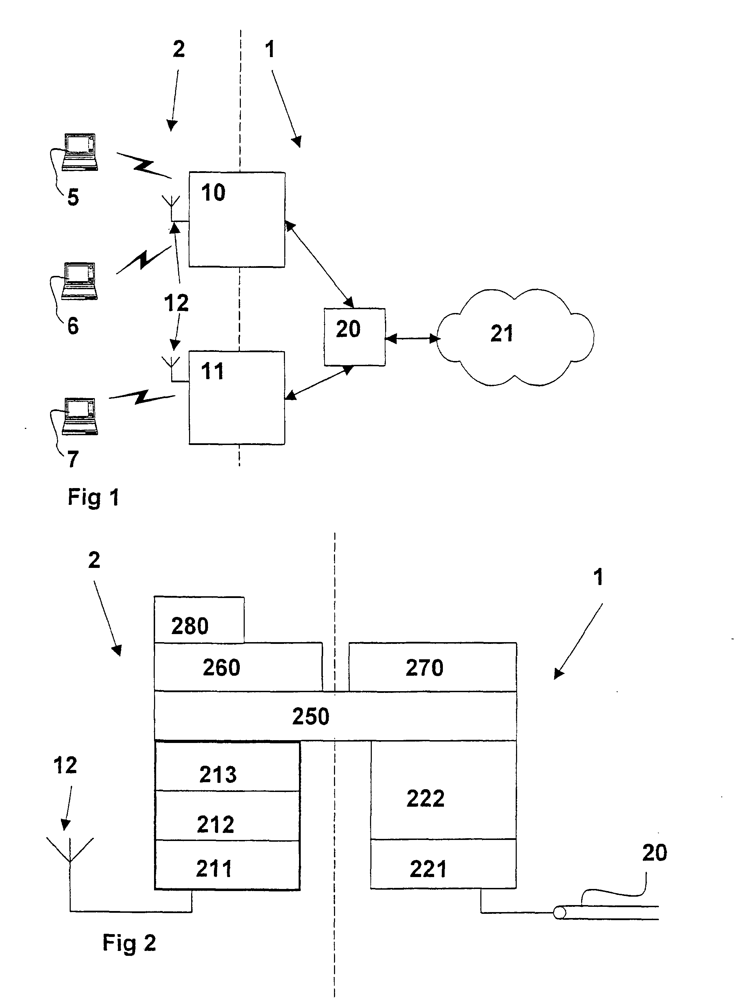

In Figur 1 ist ein drahtloses LAN-Netzwerk dargestellt, das aus einem Core-Netzwerk 1 und einem drahtlosen Anteil 2 am LAN-Netzwerk besteht. Das Core-Netzwerk 1 besteht aus einer ersten Funkstation 10, einer zweiten Funkstation 11, einer Kommunikationsverbindung 20 und weiteren Teilnehmern 21 des Core-Netzwerks 1. Sowohl die erste Funkstation 10 als auch die zweite Funkstation 11 ist bidirektional mit der Kommunikationsverbindung 20 verbunden. Weiterhin ist die Kommunikationsverbindung 20 bidirektional mit den weiteren Teilnehmern 21 des Core-Netzwerks 1 verbunden. Die Funkstationen 10, 11 sind ebenso Teil des drahtlosen Anteils 2 am LAN-Netzwerk. Hierzu umfaßt sowohl die erste Funkstation 10 als auch die zweite Funkstation 11 jeweils eine Sende-/Empfangsantenne 12. Ein weiterer Teil des drahtlosen Anteils 2 am LAN-Netzwerk ist ein erstes Endgerät 5, ein zweites Endgerät 6 und ein drittes Endgerät 7. Die Endgeräte 5, 6, 7 sind mit nicht dargestellten Sende-/Empfangsantennen ausgestattet und solchermaßen in der Lage, mit den Funkstationen 10, 11 drahtlos zu kommunizieren. Eine gestrichelte Linie teilt den drahtlosen Anteil 2 des LAN-Netzwerks vom Core-Netzwerks 1 des LAN-Netzwerks und verläuft so, daß die Funkstationen 10, 11 gerade die Schnittstelle zwischen dem drahtlosen Anteil 2 und dem Core-Netzwerk 1 des LAN-Netzwerks bilden. Die Funkstationen 10, 11, die weiteren Teilnehmern 21 und die Kommunikationsverbindung 20 des Core-Netzwerks 1 sind erfindungsgemäß vorzugsweise drahtgebunden miteinander verbunden. Die drahtlosen Verbindungen zwischen den Endgeräten 5, 6, 7 und den Funkstationen 10, 11 sind über eine Luftschnittstelle erfindungsgemäß insbesondere als Funkverbindungen ausgeführt, können jedoch auch als Infratrotverbindungen, optische Verbindungen oder dergleichen, vorgesehen sein.

Die erste Funkstation 10 versorgt eine nicht dargestellte erste Funkzelle des LAN-Netzwerks und die zweite Funkstation 11 versorgt eine nichtdargestellte zweite Funkzelle des LAN-Netzwerks. Die erste und die zweite Funkstation 10, 11 stehen im Ausführungsbeispiel für eine Vielzahl von Funkstationen. Analog stehen die Endgeräte 5, 6, 7 für eine Vielzahl von Endgeräten, die jeweils zu einem gegebenen Zeitpunkt mit einer der Funkstationen 10, 11 kommunizieren und die die Funkstationen 10, 11 auch mittels einer Übergabeprozedur (Handover) wechseln können. Die Endgeräte 5, 6, 7 unterhalten dabei zu der Funkstation 10, 11 ihrer Funkzelle wenigstens eine Verbindung, die auch als logische Verbindung bezeichnet werden kann. Zwischen einem Endgerät 5, 6, 7 und einer Funkstation sind mehrere logische Verbindungen möglich, wobei jede dieser logischen Verbindungen beispielsweise einem anderen Dienst, der am Endgerät benutzt wird, dient. Solche Dienste können beispielsweise Telefonie, Datenübertragung oder dergleichen sein. Die weiteren Teilnehmer 21 des Core-Netzwerks 1 sind insbesondere als weitere Funkstationen, IP-Server oder dergleichen ausgebildet.

In Figur 2 ist ein erfindungsgemäßes Protokolldiagramm einer der Funkstationen 10, 11 dargestellt. Die Tatsache, daß die Funkstation 10, 11 im erfindungsgemäßen LAN-Netzwerk die Schnittstelle zwischen dem Core-Netzwerk 1 und dem drahtlosen Anteil 2 am LAN-Netzwerk bildet, ist auch im Rahmen des Protokolldiagramms sichtbar. Es ergibt sich für das erfindungsgemäße Protokolldiagramm eine Einteilung der in einer Funkstation 10, 11 verwendeten Protokolle in solche Protokolle, die der Kommunikation über die Kommunikationsverbindung 20 dienen und solche Protokolle, die der Kommunikation mit den Endgeräten 5, 6, 7 über die Luftschnittstelle dienen, deren Daten über die Antenne 12 abgestrahlt bzw. empfangen werden. In Anlehnung an das OSI (Open System Interconnection)-Referenzmodell umfaßt das erfindungsgemäße Protokolldiagramm auf einer untersten Ebene eine erste physikalische Schicht 221 und eine zweite physikalische Schicht 211, wobei die erste physikalische Schicht 221 im wesentlichen der physikalischen Anbindung der Funkstation 10, 11 an die Kommunikationsverbindung 20 dient und wobei die zweite physikalische Schicht 211 im wesentlichen die Funkschnittstelle zur Antenne 12 bzw. zu den Endgeräten 5, 6, 7 zur Verfügung stellt. Oberhalb der ersten physikalischen Schicht 221 schließt sich im erfindungsgemäßen Protokolldiagramm eine erste Zwischenschicht 222 an, die erfindungsgemäß beispielsweise in Form einer Ethernet-Schnittstelle vorgesehen ist. Oberhalb der zweiten physikalischen Schicht 211 schließt sich eine erste Teilschicht 212 einer gesondert nicht dargestellten zweiten Zwischenschicht an. Die erste Teilschicht 212, im folgenden auch DLC-Schicht 212 (Data Link Control) genannt, beinhaltet alle Funktionen, die spezifisch für die Funkschnittstelle sind, wobei hier besonders die Steuerung des Zugriffs auf die Funkschnittstelle, d.h. die MAC-Kontrolle (Medium Access Control), realisiert ist. Oberhalb der ersten Teilschicht 212 schließt sich eine zweite Teilschicht 213 der zweiten Zwischenschicht an, die die Anpassung der Funktionen und der Datentypen der Funkschnittstelle an das darüberliegende Format durchführt. Die zweite Teilschicht 213 wird im folgenden auch als CL-Schicht 213 (Convergence Layer) bezeichnet. Erfindungsgemäß ist die Funkschnittstelle insbesondere als HIPERLAN-2-Funkschnittstelle vorgesehen, so daß die zweite Teilschicht 213 die Anpassung der HIPERLAN-2-Funktionen und -Datentypen an das darüberliegende Format durchführt, d.h. aus Paketen, die im HIPERLAN-2-Datenformat vorliegen, werden durch die zweite Teilschicht 213 Pakete gebildet, die das über der zweiten Teilschicht 213 liegende Kommunikationsprotokoll verwenden können. Sowohl über der ersten Zwischenschicht 222 als auch über der zweiten Zwischenschicht, d.h. oberhalb der zweiten Teilschicht 213, umfaßt das erfindungsgemäße Protokolldiagramm ein Kommunikationsprotokoll, das erfindungsgemäß insbesondere eine IP-Schicht 250 und eine UDP-Schicht 260 umfaßt. Die IP-Schicht 250 empfängt von der zweiten Teilschicht 213 IP-Datenpakete und sorgt für eine Router-Funktionalität, so daß die IP-Pakete entweder über die erste Zwischenschicht 222 (Ethernet-Schicht) einer anderen Funkstation 10, 11 bzw. einem weiteren Teilnehmer 21 des Core-Netzwerks 1 oder einer höheren Schicht innerhalb der Funkstation 10, 11 zugeführt wird. Die UDP-Schicht 260 befindet sich oberhalb der IP-Schicht 250 und stellt lediglich ein Transportverfahren dar, mit dem Daten zwischen einem Sender und einem Empfänger, die über ein IP-basiertes Netzwerk verbunden sind, übertragen werden können. Es findet in der UDP-Schicht 260 jedoch keine Sicherung der übertragenen Datenpakete statt, d.h. verlorene oder duplizierte Pakete werden bei einer Übertragung nicht als solche erkannt. Oberhalb des Kommunikationsprotokolls umfaßt das Protokolldiagramm eine zusätzliche Protokollschicht 280, die der Unterstützung des Funkübertragungsprotokolls, insbesondere des HIPERLAN-2-Netzes, in einer heterogenen Umgebung mit einem IP-Netz dient. Die zusätzliche Protokollschicht 280 wird im folgenden auch als HTCP-Schicht 280 (HIPERLAN Control Transport Protocol) bezeichnet. Die HTCP-Schicht 280 dient insbesondere der Kommunikation zwischen den Funkstationen 10, 11 untereinander und der Kommunikation zwischen den Funkstationen 10, 11 und einem Administrator. Aufgabe der HTCP-Schicht 280 ist dabei insbesondere, die Funkschnittstelle, d.h. im betrachteten Beispiel die HIPERLAN-2-Schnittstelle, bei der Durchführung einiger Funktionen zu unterstützen und dadurch zu entlasten. Hierzu kommunizieren die verschiedenen Funkstationen 10, 11 über das Core-Netzwerk 1 miteinander. Da ein kabelgebundenes Netzwerk im allgemeinen mit höheren Datenraten betrieben wird, als die Luftschnittstelle des Funkübertragungsprotokolls, ergibt sich durch die Übertragung von zwischen Funkstationen 10, 11 auszutauschenden Daten über das Core-Netzwerk 1 ein deutlicher Geschwindigkeitsvorteil, der sich gerade bei zeitkritischen Funktionen positiv auswirkt. Darüber hinaus wird die Luftschnittstelle entlastet und kann deshalb mehr Nutzdaten aufnehmen.

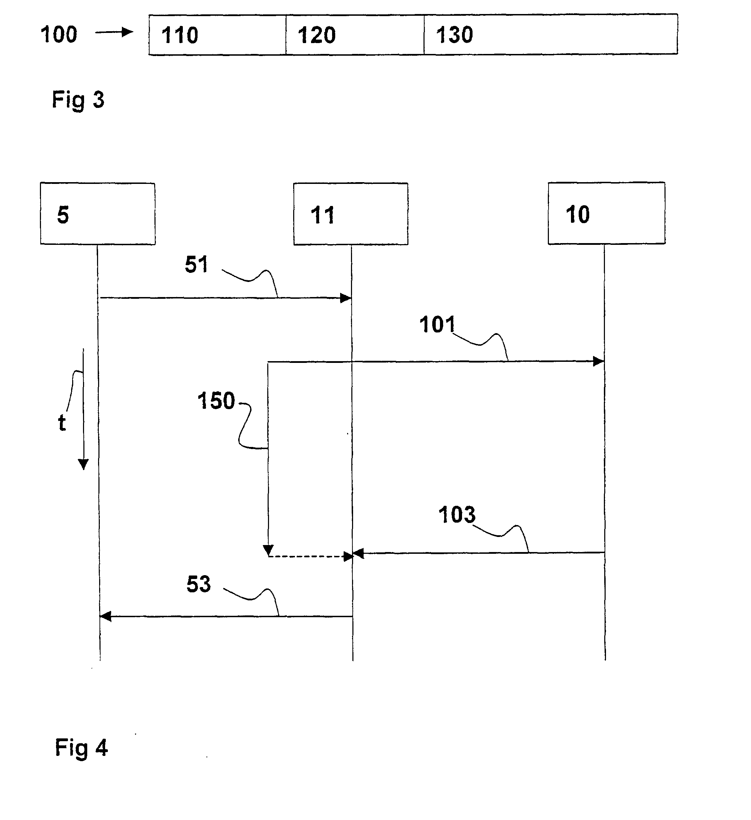

Die jeweilige HTCP-Schicht 280 von verschiedenen über das Core-Netzwerk 1 miteinander verbundenen Teilnehmern, insbesondere Funkstationen 10, 11, tauschen Steuernachrichten 100 aus, die auch als HTCP-Nachrichten 100 bezeichnet werden. In Figur 3 ist eine solche HTCP-Nachricht 100, die ein bestimmtes Datenformat einhält, dargestellt. Durch das Datenformat wird in der HTCP-Nachricht 100 ein erster Teil 110, ein zweiter Teil 120 und ein dritter Teil 130 definiert. Der erste Teil 110 dient der Angabe des Nachrichtentyps der HTCP-Nachricht 100. Der zweite Teil 120 dient der Angabe der Optionen der HTCP-Nachricht 100 und der dritte Teil 130 umfaßt Informationselemente, die die HTCP-Nachricht 100 transportiert. Insbesondere umfassen die Informationselemente beispielsweise die verwendete Frequenz einer Funkstation 10, 11, die Interferenzsituation einer Funkstation 10, 11, die Verkehrssituation in einer einer Funkstation 10, 11 zugeordneten Funkzelle, die statistischen Parameter über die zurückliegende Verkehrssituation und die Fehlermeldungen. Diese Informationselemente werden insbesondere zur Steuerung und/oder zur Verwaltung der Funkstationen 10, 11 im Rahmen des Austauschs von Steuernachrichten 100 verwendet.

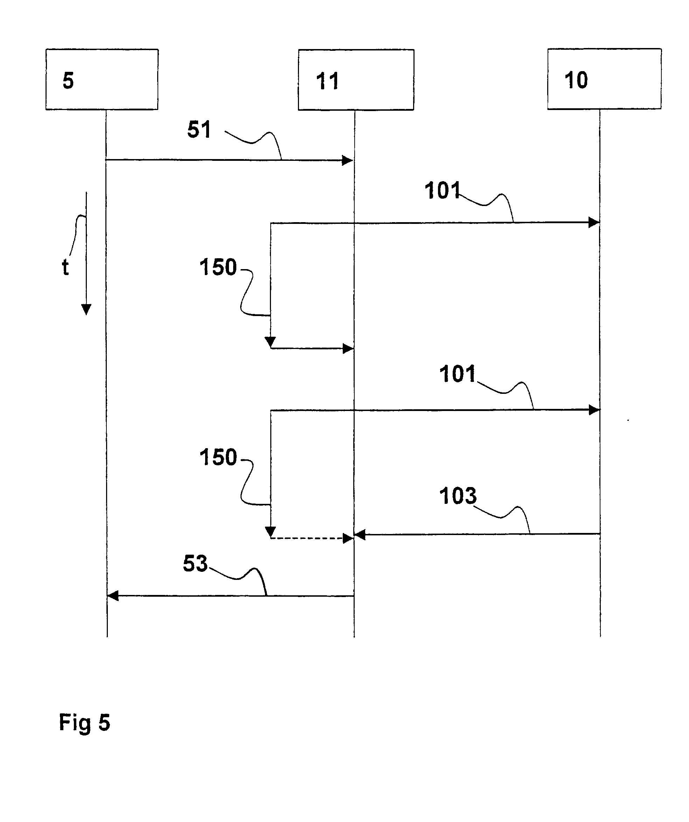

Im folgenden wird anhand der Figuren 4 und 5 ein Beispiel für die Durchführung einer zeitkritischen HIPERLAN-2-Funktion unter Verwendung von HTCP-Nachrichten 100 gegeben. In Figur 4 ist ein erstes Signalisierungsdiagramm und in Figur 5 ist ein zweites Signalisierungsdiagramm bei der kontrollierten Übertragung von Steuernachrichten 100 zwischen Funkstationen 10, 11 dargestellt. Die Steuernachrichten 100 dienen im angegebenen Beispiel der Realisierung eines Übergabevorgangs (Handover) des ersten Endgerätes 5 von einer Kommunikation mit der ersten Funkstation 10 zu einer Kommunikation mit der zweiten Funkstation 11. Bei diesem Vorgang sollen alle zwischen der ersten Funkstation 10 und dem Endgerät 5 bestehenden Kommunikationsverbindungen von der zweiten Funkstation 11 übernommen und weitergeführt werden. Dazu müssen die Verbindungsdatensätze in die zweite Funkstation 11 transferiert werden. Wenn sich das erste Endgerät 5 bei einer Übergabe, beispielsweise bedingt durch den Wechsel einer Funkzelle, bei der zweiten Funkstation 11 meldet, überträgt es bei dieser Anmeldung die Adresse der ersten Funkstation 10. Mit dieser Adresse und der Kennung des ersten Endgerätes 5, die beim Anmeldevorgang übertragen wird, fordert die zweite Funkstation 11 dann die Verbindungsdaten von der ersten Funkstation 10 an. Hierbei kommunizieren die HTCP-Schicht 280 der zweiten Funkstation 11 und die HTCP-Schicht 280 der ersten Funkstation 10 zum Austausch von Steuernachrichten 100 miteinander. Die Steuernachrichten 100 werden über das die Funkstationen 10, 11 verbindende Core-Netzwerk 1 übertragen. Neben den Verbindungsdaten läßt sich durch die direkte Kommunikation zwischen der zweiten Funkstation 11 und der ersten Funkstation 10 auch die Authentifizierung des ersten Endgerates 5 gegenüber der zweiten Funkstation 11 und die Übertragung von evtl. bestehenden Verschlüsselungscodes durchführen. Dadurch ist ein zusätzlicher Geschwindigkeitsvorteil gegeben, da Daten über das Core-Netzwerk 1 in der Regel mit einer höheren Datenrate übertragen werden können als über die Funkverbindung zwischen den Endgeräten 5, 6, 7 und den Funkstationen 10, 11.

Zur Verdeutlichung eines solchen Übergabevorgangs ist sowohl in Figur 4 als auch in Figur 5 eine erste senkrechte Linie mit dem Bezugszeichen 5 versehen, die in ihren vertikalen Verlauf von oben nach unten den Zeitverlauf von eingehenden und abgehenden Nachrichten am ersten Endgerät 5 darstellt. Weiterhin ist in den Figuren 4 und 5 eine zweite senkrechte Linie mit dem Bezugszeichen 11 versehen, wobei die zweite senkrechte Linie den zeitlichen Verlauf von eingehenden und abgehenden Daten an der zweiten Funkstation 11 darstellt. Weiterhin ist in den Figuren 4 und 5 eine dritte senkrechte Linie mit dem Bezugszeichen 10 versehen, die den zeitlichen Verlauf eingehender und ausgehender Daten an der ersten Funkstation 10 darstellt. Die Orientierung des zeitlichen Verlaufs auf den senkrecnten Linien wird durch einen zehnten Pfeil mit dem Bezugszeichen t dargestellt, der senkrecht nach unten weist. Nach dieser gemeinsamen Beschreibung der grundsätzlichen Struktur der Figuren 4 und 5 wird im folgenden zunächst die Figur 4 näher beschrieben.

In Figur 4 weist ein erster waagrechter Pfeil von der ersten Linie zur zweiten Linie. Der erste Pfeil entspricht einer Übergabeindikation 51, die das erste Endgerät 5 an die zweite Funkstation 11 sendet. Die Übergabeindikation 51 beinhaltet die Adresse der ersten Funkstation 10, über die das erste Endgerät 5 vor der Einleitung des Ubergabevorgangs seine Kommunikationsverbindungen geführt hat. Weiterhin beinhaltet die Übergabeindikation 51 eine Kennung, mit der das erste Endgerät 5 identifiziert wird (Terminal Kennung). Die Übergabeindikation 51 erfolgt gemäß dem Funkübertragungsprotokoll 211, 212. Daraufhin fordert die zweite Funkstation 11 bei der ersten Funkstation 10 mittels einer durch einen zweiten Pfeil dargestellten ersten Steuernachricht 101 (Anforderung der Datensätze) die zur Durchführung der Übergabe notwendigen Datensätze an. Der zweite Pfeil weist dabei von der zweiten senkrechten Linie zur dritten senkrechten Linie und ist räumlich unterhalb des ersten waagrechten Pfeils angeordnet, wodurch darauf hingewiesen wird, daß die erste Steuernachricht 101 zeitlich nach der Übergabeindikation 51 erfolgt. Gleichzeitig mit der ersten Steuernachricht 101 startet die zweite Funkstation 11 einen Zeitzähler 150, der überwacht, ob eine Antwort von der ersten Funkstation 10 innerhalb eines vorgegebenen Zeitintervalls bei der zweiten Funkstation 11 eintrifft. Die erste Steuernachricht 101, die auch Anforderung 101 der Datensätze genannt wird, wird von der ersten Funkstation 10 mit der durch einen vierten waagrechten Pfeil dargestellten zweiten Steuernachricht 103 beantwortet. Die zweite Steuernachricht 103, die auch Antwort 103 genannt wird, enthält die benötigten Informationen zur Authentifizierung, Verschlüsselung und der Art der bestehenden Verbindungen zwischen dem ersten Endgerät 5 und der ersten Funkstation 10. Der vierte Pfeil weist von der dritten Linie zur zweiten Linie. Der Zeitzähler 150 wird durch den dritten, senkrecht nach unten weisenden Pfeil dargestellt, der auf der Höhe des zweiten Pfeils beginnt und dessen Länge einem vorgegebenen Zeitintervall entspricht, innerhalb dessen bei der zweiten Funkstation 11 die Antwort 103 der ersten Funkstation 10 auf die Anforderung 101 der Datensätze eingetroffen sein muß. In Figur 4 trifft die Antwort rechtzeitig ein, was dadurch dargestellt wird, daß der vierte Pfeil räumlich oberhalb des Endpunktes des dritten Pfeils angeordnet ist. Somit zeigt Abbildung 4 den Fall, daß die Antwort 103 von der ersten Funkstation 10 rechtzeitig bei der zweiten Funkstation 11 eintrifft. Beim Eintreffen der Antwort 103 wird der Zeitzähler 150 gelöscht. Die für die Kommunikation zwischen den Funkstationen 10, 11 benutzte Anforderung 101 und Antwort 103 sind nach dem in Abbildung 3 gezeigten grundlegenden Aufbau gestaltete Steuernachrichten 100. Für das Beispiel der Übergabe des ersten Endgerätes 5 von der ersten Funkstation 10 zur zweiten Funkstation 11 werden, wie erwähnt, Steuernachrichten 100 zur Anforderung der Datensätze und zur Antwort auf diese Anforderung benutzt. Für andere Kommunikationssituationen, beispielsweise bei der Verwaltung von Funkstationen 10, 11 werden andere Steuernachrichten 100, deren Teile 110, 120, 130 auf die jeweilige Kommunikationssituation hin ausgelegt sind, benutzt. Die Kommunikation und die Datenformate zwischen dem ersten Endgerät 5 und der zweiten Funkstation 11 wird erfindungsgemäß insbesondere gemäß des HIPERLAN-2-Standards beschrieben. Hierzu sendet die zweite Funkstation 11 eine durch einen fünften waagrechten Pfeil dargestellte Übergabebestätigung 53 an das erste Endgerät 5. Der fünfte Pfeil weist von der zweiten senkrechten Linie zur ersten senkrechten Linie. Der fünfte waagrechte Pfeil ist räumlich unterhalb des vierten Pfeils vorgesehen, was einem späteren Zeitpunkt für die Übergabebestätigung 53 gegenüber der Antwort 103 entspricht.

In Figur 5 ist das zweite Signalisierungsdiagramm bei der kontrollierten Übertragung von Steuernachrichten 100 zwischen dem ersten Endgerät 5 einerseits und der ersten bzw. zweiten Funkstation 10, 11 dargestellt. Der Beginn der Kommunikation im zweiten Signalisierungsdiagramm ist identisch mit dem Beginn der Kommunikation im ersten Signalisierungsdiagramm, weshalb der erste Pfeil, der zweite Pfeil und der dritte Pfeil in Figur 5 identisch mit der Darstellung in Figur 4 sind. Im weiteren zeitlichen Verlauf unterscheiden sich die Signalisierungsdiagramme. In Figur 5 ist bis zum Ablauf des Zeitzählers 150 keine Antwort 103 von der ersten Funkstation 10 zur zweiten Funkstation 11 gelangt. Die zweite Funkstation 11 wiederholt daraufhin die Anforderung 101 der Datensätze, was durch einen sechsten waagrechten Pfeil, der von der zweiten Linie zur dritten Linie weist und der unterhalb des Endpunktes des dritten Pfeils angeordnet ist, dargestellt ist. Gleichzeitig startet der Zeitzähler 150 ein zweites Mal, was durch einen siebten, senkrecht nach unten weisenden Pfeil dargestellt ist. Der siebte Pfeil beginnt auf der Höhe des sechsten Pfeils und gibt das vorgegeben Zeitintervall an, innerhalb dessen die zweite Funkstation 11 die Antwort 103 auf die Anforderung 101 der Datensätze erwartet. Auf die wiederholte Anforderung 101 der Datensätze hin erhält die zweite Funkstation 11 von der ersten Funkstation 10 rechtzeitig vor Ablauf des Zeitzählers 150 die durch einen achten waagrechten Pfeil dargestellte Antwort 103. Der achte Pfeil weist von der dritten senkrechten Linie zur zweiten senkrechten Linie oberhalb des Endpunktes des siebten Pfeils. Der Zeitzähler 150 wird daher gelöscht. Die Übergabe des ersten Endgerätes 5 von der ersten Funkstation 10 zur zweiten Funkstation 11 wird mittels der Übergabebestätigung 53 von der zweiten Funkstation 11 zum ersten Endgerät 5 abgeschlossen. Dies wird durch einen neunten waagrechten Pfeil, der von der zweiten Linie zur ersten Linie weist, dargestellt.

Im Anwendungsbeispiel ist das Core-Netzwerk als sogenanntes Ethernet oder IEEE 802.3-Netzwerk aufgebaut, weil die meisten Local Area Netzworks heute als Ethernet-Netzwerke aufgebaut sind, die IP-Pakete über Ethernet/IEEE 802.3 transportieren. Daher ist es sinnvoll, auch den IP/UDP/HTCP Datentransfer über den Ethernet/IEEE 802.3-Standard abzuwickeln.

HIPERLAN-2 erlaubt jedoch ebenso die Verwendung von anderen Core-Netzwerken 1 wie ATM, IEEE1394 oder UMTS. In diesen Fällen steht nicht in jeden Fall eine IP-Protokoll-Stack zur Verfügung. Daher muß hier entweder IP über das jeweilige Core-Netzwerk transportiert oder ein anderer Dienst als IP/UDP verwendet werden. Im Fall der Benutzung von UMTS im Core-Netzwerk 1 ist dieses ebenfalls drahtlos ausgebildet.

Um die Sicherheit zusätzlich zu verbessern, kann es sinnvoll sein, die Kommunikation über HTCP zwischen den Funkstationen 10, 11 zusätzlich zu verschlüsseln, um ein Ausspähen oder Verändern von HTCP-Paketen im Core-Netzwerk zu verhindern. Dazu bieten sich die bestehenden Verschlusselungsmechanismen an, die für das IP definiert sind. Da HIPERLAN-2 für die Funkstationen 10, 11 andere Adressen verwendet als IP, muß eine Umsetzung dieser Adressen durchgeführt werden. Dazu ist es sinnvoll, in jeder Funkstation 10, 11 eine Liste mit erreichbaren (anderen) Funkstationen 10, 11, in der beide Adressen für jede erreichbare Funkstation 10, 11 aufgeführt sind, zu führen. Diese Adressen sollten dynamisch ermittelt werden und nach einer bestimmten Zeit wieder gelöscht werden, um die Aktualität der Liste zu garantieren. Die Adresse einer Funkstation 10, 11 kann ermittelt werden, indem ein HTCP-Informationselement im dritten Teil 130 einer Steuernachricht 100 mit der Anfrage nach einer HIPERLAN-2-Adresse der erreichbaren Funkstationen 10, 11 als Broadcast-Nachricht an alle erreichbaren Funkstationen 10, 11 gesendet wird. Die Funkstation 10, 11 mit der nachgefragten HIPERLAN-2-Adresse wird diese Anfrage beantworten und in ihrer Antwort die eigene IP-Adresse mitteilen.

## Patentansprüche

1. Verfahren zur Steuerung einer ersten Funkstation (10) und einer zweiten Funkstation (11), wobei die Funkstationen (11, 12) über wenigstens eine Kommunikationsverbindung (20) sowohl miteinander verbunden sind als auch gemäß eines Kommunikationsprotokolls steuerbar sind, wobei die erste Funkstation (10) mit wenigstens einem Endgerät (5, 6, 7) gemäß eines rahmenstrukturierten Funkübertragungsprotokolls (211, 212) mit Paketvermittlung kommuniziert, wobei durch das Funkübertragungsprotokoll (211, 212) eine verbindungsorientierte Kommunikation zwischen der ersten Funkstation (10) und dem wenigstens einen Endgerät (5, 6, 7) über wenigstens eine Verbindung ermöglicht wird, **dadurch gekennzeichnet, daß** mittels einer das Kommunikationsprotokoll verwendenden zusätzlichen Protokollschicht (280) eine Kommunikation der Funkstationen (10, 11) untereinander über ein kabelgebundenes Netzwerk (1) ermöglicht wird, um Steuernachrichten (101, 103) zur Steuerung der wenigstens einen Verbindung auszutauschen.

2. Verfahren nach Anspruch 1, **dadurch gekennzeichnet, daß** durch die zusätzliche Protokollschicht (280) gewährleistet wird, daß nach der Aussendung einer ersten Steuernachricht (101) von der zweiten Funkstation (11) an die erste Funkstation (10) eine Wiederholung der Aussendung der ersten Steuernachricht (101) durch die zweite Funkstation (11) durchgeführt wird, wenn in der zweiten Funkstation (11) vor dem Ablauf eines Zeitintervalls (150) nicht eine zweite Steuernachricht (103), die von der ersten Funkstation (10) ausgeht und die erste Steuernachricht (101) quittiert und/oder beantwortet, eingegangen ist.

3. Verfahren nach Anspruch 2, **dadurch gekennzeichnet, daß** eine Übergabe (Handover) des wenigstens einen Endgerätes (5, 6, 7) von einer Kommunikation mit der ersten Funkstation (10) zu einer Kommunikation mit der zweiten Funkstation (11) durch eine entsprechende Wahl des Zeitintervalls (150) derart unterstützt wird, daß die wenigstens eine Verbindung nicht unterbrochen wird.

4. Verfahren nach Anspruch 1, 2 oder 3, **dadurch gekennzeichnet, daß** in der ersten Funkstation (11) eine Liste der über das Kommunikationsprotokoll erreichbaren Funkstationen (10, 11) geführt und vorzugsweise in regelmäßigen Zeitintervallen aktualisiert wird.

5. Verfahren nach einem der vorhergehenden Ansprüche, **dadurch gekennzeichnet, daß** die Steuernachrichten (101, 103) zwischen der ersten Funkstation (10) und der zweiten Funkstation (11) ausgetauscht werden, wobei jede der Steuernachrichten (101, 103) sowohl einen ersten Teil (110), der einen Nachrichtentyp der Steuernachricht definiert, einem zweiten Teil (120), der Optionen der Steuernachricht definiert, und einen dritten Teil (130), der Daten beinhaltet, umfaßt.

6. Verfahren nach Anspruch 5, **dadurch gekennzeichnet, daß** in dem dritten Teil (130) einer Steuernachricht (101, 103) Informationselemente, vorzugsweise die verwendete Frequenz einer Funkstation, die Interferenzsituation einer Funkstation, die Verkehrssituation in einer einer Funkstation (10, 11) zugeordnete Funkzelle, die statistischen Parameter über die zurückliegende Verkehrssituation und die Fehlermeldungen, zur Steuerung und/oder zur Verwaltung der Funkstationen (10, 11) zwischen diesen übertragen werden.

7. Verfahren nach einem der vorhergehenden Ansprüche, **dadurch gekennzeichnet, daß** die Steuernachrichten (101, 103) vor ihrer Übertragung verschlüsselt werden.

8. Verfahren nach einem der vorhergehenden Ansprüche, **dadurch gekennzeichnet, daß** das Funkübertragungsprotokoll (211, 212) dem HIPERLAN- oder HIPERLAN-2-Standard entspricht.

9. Verfahren nach einem der vorhergehenden Ansprüche, **dadurch gekennzeichnet, daß** das Kommunikationsprotokoll dem IP-Standard (Internet-Protocol) in Verbindung mit dem UDP-Protokoll (User Data Protocol), aufbauend entweder auf einem Ethernet-Standard, einem IEEE-802.3-Standard, einem ATM-Standard (Asynchronous Transfer Mode), einem IEEE-1394-Standard oder einem UMTS-Standard (Universal Mobile Telecommunication Service), entspricht.

## Claims

1. Method for controlling a first radio station (10) and a second radio station (11), in which case the radio stations (10, 11) are not only connected to one another but can also be controlled (in accordance with a communication protocol) via at least one communication link (20), with the first radio station (10) communicating with at least one terminal (5, 6, 7) in accordance with a frame-structured radio transmission protocol (211, 212) by means of packet switching, with the radio transmission protocol (211, 212) allowing connection-oriented communication between the first radio station (10) and the at least one terminal (5, 6, 7) via at least one link, **characterized in that** an additional protocol layer (280), which uses the communication protocol, allows the radio stations (10, 11) to communicate with one another via a cable network (1) in order to interchange control messages (101, 103) for controlling the at least one link.

2. Method according to Claim 1, **characterized in that** the additional protocol layer (280) ensures that, once a first control message (101) has been transmitted from the second radio station (11) to the first radio station (10), the first control message (101) is retransmitted by the second radio station (11) if a second control message (103), which originates from the first radio station (10) and acknowledges and/or responds to the first control message (101) has not been received in the second radio station (11) before a time interval (150) has elapsed.

3. Method according to Claim 2, **characterized in that** a handover of the at least one terminal (5, 6, 7) from communication with the first radio station (10) to communication with the second radio station (11) is assisted by appropriate choice of the time interval (150) such that the at least one link is not interrupted.

4. Method according to Claim 1, 2 or 3, **characterized in that** the first radio station (10) maintains a list of the radio stations (10, 11) which can be accessed via the communication protocol, and the list is preferably updated at regular time intervals.

5. Method according to one of the preceding claims, **characterized in that** the control messages (101, 103) are interchanged between the first radio station (10) and the second radio station (11), with each of the control messages (101, 103) comprising both a first part (110) which defines the message type of the control message, a second part (120) which defines the options for the control message, and a third part (130) which contains data.

6. Method according to Claim 5, **characterized in that** information elements, preferably the frequency used by a radio station, the interference situation at a radio station, the traffic situation in a radio cell which is associated with a radio station (10, 11), the statistical parameters relating to the previous traffic situation and the error messages, are transmitted between the radio stations (10, 11) in order to control and/or to administer the radio stations (10, 11), in the third part (130) of a control message (101, 103).

7. Method according to one of the preceding claims, **characterized in that** the control messages (101, 103) are scrambled before they are transmitted.

8. Method according to one of the preceding claims, **characterized in that** the radio transmission protocol (211, 212) corresponds to the HIPERLAN or HIPERLAN-2 Standard.

9. Method according to one of the preceding claims, **characterized in that** the communication protocol corresponds to the IP standard (Internet Protocol) in conjunction with the UDP Protocol (User Data Protocol), building either on an Ethernet Standard, an IEEE-802.3 Standard, an ATM Standard (Asynchronous Transfer Mode), an IEEE-1394 Standard or a UMTS Standard (Universal Mobile Telecommunication Service).

## Revendications

1. Procédé de commande d'une première station radio (10.) et d'une deuxième station radio (11), les stations radio (11, 12) pouvant aussi bien être reliées l'une à l'autre que commandées selon un protocole de communication par l'intermédiaire d'au moins une liaison de communication (20), la première station radio (10) communiquant avec au moins un terminal (5, 6, 7) selon un protocole de transmission radio (211, 212) à cadre structuré avec commutation de paquets, le protocole de transmission radio (211, 212) permettant une communication orientée liaison entre la première station radio (10) et au moins un terminal (5, 6, 7) par l'intermédiaire d'au moins une liaison,
**caractérisé en ce qu'**
à l'aide d'un niveau de protocole (280) supplémentaire utilisant le protocole de communication, une communication des stations radio (10, 11) entre elles est possible par l'intermédiaire d'un réseau câblé (1) pour échanger des messages de commande (101, 103) pour commander au moins la liaison.

2. Procédé selon la revendication 1,
**caractérisé en ce que**
le niveau de protocole (280) supplémentaire assure qu'après l'envoi d'un premier message de commande (101) par la deuxième station radio (11) à la première station radio (10) une répétition de l'envoi du premier message de commande (101) par la deuxième station radio (11) est effectuée, si la deuxième station radio (11), avant l'écoulement d'un intervalle de temps (150), n'a pas reçu un deuxième message de commande (103) envoyé par la première station radio (10) et qui accuse réception du premier message de commande (101) et/ou répond à celui-ci.

3. Procédé selon la revendication 2,
**caractérisé en ce qu'**
un transfert (handover) par au moins un terminal (5, 6, 7) d'une communication avec la première station radio (10) vers une communication avec la deuxième station radio (11) par un choix correspondant de l'intervalle de temps (150) est supporté de manière à ce qu'au moins la liaison ne soit pas coupée.

4. Procédé selon la revendication 1, 2 ou 3,
**caractérisé en ce que**
dans la première station radio (11) une liste des stations radio (10, 11) accessibles par l'intermédiaire du protocole de communication est tenue et de préférence actualisée à intervalles de temps réguliers.

5. Procédé selon l'une quelconque des revendications précédentes,
**caractérisé en ce que**
les messages de commande (101, 103) sont échangés entre la première station radio (10) et la deuxième station radio (11), chacun des messages de commande (101, 103) comprenant aussi bien une première partie (110) définissant un type de message du message de commande, qu'une deuxième partie (120) définissant des options du message de commande, et qu'une troisième partie (130) contenant des données.

6. Procédé selon la revendication 5,
**caractérisé en ce que**
dans la troisième partie (130) d'un message de commande (101, 103) des éléments d'information, de préférence la fréquence utilisée d'une station radio, la situation des interférences d'une station radio, la situation du trafic dans une cellule radio associée à l'une des stations radio (10, 11), les paramètres statistiques concernant la situation du trafic précédente et les messages d'erreur, sont transmis entre les stations radio (10, 11) pour commander et/ou gérer celles-ci.

7. Procédé selon l'une quelconque des revendications précédentes,
**caractérisé en ce que**
les messages de commande (101, 103) sont codés avant leur transmission.

8. Procédé selon l'une quelconque des revendications précédentes,
**caractérisé en ce que**
le protocole de transmission radio (211, 212) correspond à la norme HIPERLAN ou HIPERLAN 2.

9. Procédé selon l'une quelconque des revendications précédentes,
**caractérisé en ce que**
le protocole de communication correspond à la norme IP (Internet-Protocol) en association avec le protocole UDP (User Data Protocol), basé soit sur une norme Ethernet, une norme IEEE-802.3, une norme ATM (Asynchronous Transfer Mode), une norme IEEE-1394 soit sur une norme UMTS (Universal Mobile Telecommunication Service).
